# EUROPEAN PATENT APPLICATION

(11) **EP 3 995 995 A1**
(43) Date of publication of application: **11.05.2022**
(21) Application number: 21204393.9
(22) Date of filing: 25.10.2021
(51) Int. Cl.: G06K 19/077, G09F 3/03

(54) **A TAG FOR IDENTIFYING A PACKAGE AND A METHOD THEREOF**

(30) Priority: 04.11.2020 EP 20205586
(71) Applicant: Tetra Laval Holdings & Finance S.A., 1009 Pully (CH)
(72) Inventor: BORELLI, Gabriele, 41057 Spilamberto (MO) (IT); SCARABELLI, Paolo, 42020 Reggio Emilia (IT)
(74) Representative: Tetra Pak - Patent Attorneys SE

(57) **Abstract**

A tag (108, 118) for identifying a package (100) in a plant. The tag (108, 118) comprising: a first circuit (110) and a second circuit (112) for transforming an electrical magnetic field into a current for generating electrical energy; and a controller (114) powered via the electrical energy, wherein the controller (114) comprises a processor (202) and a memory (304) configured to hold an identification code, wherein the controller (114) is connected to the first circuit (110) and the second circuit (112); wherein the first circuit (110) is facing a first surface (102) of the package (100) and the second circuit (112) is facing a second surface (104) of the package (100), wherein the first surface (102) has a first normal (202) and the second surface (104) has a second normal (204), the first normal (202) and the second normal (204) are inclined with an angle α.

## Description

### Technical Field

The invention is related to packaging technology. More particularly, it is related to a tag for identifying a package and a method for identifying the package using the tag when the package is stacked together with other packages.

### Background Art

In food production today, there are strict food safety regulations to be followed to make sure that consumers are not harmed by food products. The food safety regulations are stipulating which kind of materials that are allowed to be in contact with food products, how often samples should be taken, what type of tests that should be performed in the samples, at which temperature and for how long time the food product should be heat treated in order to be considered safe to consume, and so forth. Even though the regulations are in place, frequent samples are made from the food production and several different quality controls are performed, there is from time to time nevertheless a need to recall products that have been shipped from a food production site.

Today, when the food products are recalled, distribution centers to which the food packages have been shipped are contacted. If the food packages have been transported from the distribution centers to stores, the distribution centers are in turn contacting the stores. In the event that the food products have reached store shelves and have been sold to consumers before a decision to recall the food product has been made, newspaper and other media may be used for informing the consumers that the food products may be harmful and therefore not to be consumed.

When a decision to recall the food products has been made, the food products should be possible to identify in an efficient way. Thus, there is a need to identify where the packages that comprise the harmful food products are located. In order to be able to follow the packages, reliable traceability solutions are therefore today requested by food producers.

A traceability solution used today is to apply an RFID tag to each package such that the information about the package may be identified and stored. A drawback with today's approach is that the RFID tags increase cost, which makes this solution less attractive to many food producers. An additional drawback is that the RFID tag can break with the implication that this cannot be read, which in turn reduces reliability. Further, when stacking many packages, e.g. on a pallet, the RFID tags may be placed such that these cannot be read, which also reduces reliability.

Based on the above, there is a need for improved identification technology of packages, especially within the food industry, such that the food products can be traced in a reliable manner without significant cost increases.

### Summary

It is an object of the invention to at least partly overcome one or more of the above-identified limitations of the prior art.

According to a first aspect it is provided a tag for identifying a package in a plant, the tag comprising:
a first circuit and a second circuit for transforming an electrical magnetic field into a current for generating electrical energy; and
a controller powered via the electrical energy, wherein the controller comprises a processor and a memory configured to hold an identification code, wherein the controller is connected to the first circuit and the second circuit;
wherein the first circuit is facing a first surface of the package and the second circuit is facing a second surface of the package, the first surface has a first normal and the second surface has a second normal, wherein the first normal and the second normal forms an angle α therebetween.

The package may be a secondary package holding a plurality of primary packages. The secondary package can be used for logistic purposes, e.g. providing for that multiple packages can be handled together, but also for branding purposes.

The identification code may be a unique identification code comprising information about the food product in the primary package as well as distribution information related to the primary package and/or the secondary package.

The tag may be arranged to be read by a reader such that the information comprised in the identification code may be transmitted from the tag to the reader. The reader may be arranged to transmit the electrical magnetic field to the first circuit and/or the second circuit, wherein the first circuit and/or the second circuit may transform the electrical magnetic field into the current for generating the electrical energy. Thus, by the term "first circuit and second circuit" is here meant any circuit(s) that may be configured to receive electrical magnetic field from the reader and to transform the electrical magnetic field into the current for generating the electrical energy. According to one non-limiting example, the tag may be a RFID tag. According to another non-limiting example, the tag may be a HF tag. According to yet another non-limited example, the tag may be a UHF tag. Preferably, the tag may be a RFID UHF tag. The RFID UHF tag is more suitable for logistical environment because of the possibilities of using a higher frequency. The UHF frequency band covers the range from 300 MHz to 3 GHz, wherein the HF frequency band covers the range from 1.75 MHz to 13.56 MHz.

It should be noted that the first surface and the second surface may be oriented in different ways based on that the first normal and the second normal forms an angle therebetween. Thus, the first normal and the second normal may be oriented in different ways and thereby may also the first surface and the second surface be oriented in different ways. An advantage achieved when the first surface and the second surface may be oriented in different ways is that the first circuit, facing the first surface, and the second circuit, facing the second surface, may receive the electrical magnetic field from different positions. Thus, the tag may be readable even if only one of the two circuits is directed to the reader such that the reader may transmit the electrical magnetic field to the tag. It should further be noted that the second circuit may be facing the first surface and vice versa. According to one non-limiting example, the first circuit and the second circuit may be single-loop circuits. According to another non-limiting example, the first circuit and the second circuit may be dipole-shaped.

An advantage with the tag is that the readability of the package is increased. Thus, when the tag is facing two different surfaces of the package enables for that any of the two surfaces may be directed to the reader in order to read the tag. Comparing the present disclosure with conventional tags, wherein the tag normally comprises one circuit and one controller and facing one surface of the package, an improved identification technology is achieved. Hence, the tag is advantageous in that a more robustness to readability in different reading conditions such that obstacles, coverage and mutual orientation between the tag and the reader is achieved.

A further advantage is that only one controller is needed even if two circuits are used. Thus, the production cost may be decreased since only one controller is used for controlling two, or more, circuits. Further, this disclosure provides for a more efficient identification of the package as well.

A yet further advantage with the disclosed design, compared to attaching multiple labels to the package, is that the costs, such that material costs and applying equipment costs, are lowered. Thus, instead of applying multiple tags to the package, only one tag is needed with the present disclosure. A further advantage is that the complexity in the system may be lowered since only one tag may be facing the package and read by the reader compared to e.g. multiple tags to be applied and read.

Positioning of the tag is important to achieve good reading rates. In particular, the orientation of the tag with respect to the reader is key in maximizing the readability. Thus, a further advantage achieved with the disclosed tag is that the readability is increased because the tag may be facing two or more surfaces of the package.

According to one non-limiting example, this disclosure may be relevant when stacking packages on top of each other. Thus, when stacking packages, it is easy to cover one or more surfaces of the package by other packages but when the tag may be facing more than one surface, the flexibility of stacking the packages is increased as well as an increased traceability of the package is achieved.

An advantage with improved traceability is that, if one package sample may be identified with a problem, it may be possible to trace the other package samples within the same batch, that may have been exposed to a similar problem. This in combination with the improved readability using the tag applied to at least two surfaces of the package provides for that insufficiently processed or packaged products may be detected quicker, which is e.g. important from a food safety perspective.

A yet further advantage, when the tag is bent and applied across multiple surfaces, is that the tag has a sensible advantage in readability robustness in different situations.

The angle α may be equal to 90 degrees.

The degree of the angle may depend on the shape of the package. Thus, if the package is of a rectangular prism shape, the angle may be equal to 90 degrees, but if the package is of another shape, the degree of the angle may be different. It should be noted that the angle α may be greater than zero.

The tag may be embedded in the package.

By the term "embedded" is here meant that the tag is a part of the package. Thus, the tag is introduced during production and is not applied or attached to the package after production. It should be understood that if the tag may be embedded in the package, the first circuit, the second circuit and the controller may also be embedded in the package because they are comprised in the tag. Put differently, the tag may be incorporated in the package.

An advantage with having the tag embedded in the package is that there may not be any need for attaching the tag on the package after production, but the tag may be embedded in the package during production, e.g. in a converting factory producing packaging material. Thus, the production may remain more or less the same and there is no need for adding a step of attaching the tag to the package after the production. A further advantage may be that the risk of the tag being removed from the package is limited. Thus, in order to remove the tag from the package, there may be a need of destroying the package. Thus, an improved security of the tag is achieved.

The tag may comprise an adhesive strip in which the first circuit and the controller, placed on a first part of the adhesive strip, and the second circuit, placed on a second part of the adhesive strip, may be embedded.

The adhesive strip may be a multi-layer adhesive strip such that the first circuit, the second circuit and the controller may be arranged between the layers of the multi-layer strip. Thus, the first circuit, the second circuit and the controller may be embedded in the adhesive strip. Put differently, the first circuit, the second circuit and the controller may be incorporated in the adhesive strip.

However, it should be noted that the first circuit may be placed on the second part of the adhesive strip and vice versa, but the first circuit and the second circuit should be placed on different parts of the adhesive strip. The controller may be placed on any of the first part or the second part.

An advantage with this design, wherein the tag may comprise the adhesive strip, is that the tag may be attached to the package after production. Thus, a more flexible solution of attaching the tag to the package is achieved.

The tag may further comprise a first folding line, wherein the first folding line may be arranged such that the first circuit and the second circuit are arranged on opposite sides of the first folding line.

The first folding line may be a creased line, also referred to as a pre-bent line or a weakening line. It should be noted that the first folding line may be arranged anywhere on the tag as long as the two circuits are arranged on opposite sides of the first folding line. It should further be noted that the controller may be arranged anywhere on the tag as long as the controller is arranged on either side of the first folding line. Thus, the controller should not be arranged where the folding line is present. It should be noted that the first part and the second part may be asymmetric.

An advantage achieved with the first folding line is that the bending of the tag may be smoother and more stable. Thus, the risk of fractures in the fold may be reduced. The folding line is advantageous since the tag is extra sensitive in the bending section. According to one non-limiting example, the circuit(s) may be thicker in the fold in order to withstand bending forces.

The tag may further comprise:
a third circuit for transforming the electrical magnetic field into the current for generating electrical energy,
wherein the controller may further be connected to the third circuit; and
wherein the third circuit may be facing a third surface of the package, wherein the third surface may have a third normal.

An advantage achieved by introducing the third circuit may be that an even more improved readability is achieved. Thus, by introducing the tag with three circuits provides for that the tag may be facing three different surfaces of the package. By having three circuits in the tag is preferably advantageous when introducing the tag on a corner of the package.

According to one non-limiting example, the first, second and third circuits may each be connected to the controller. According to another non-limiting example, two of the circuits may be jointly connected before the controller such that only two circuits are connected to the controller.

The third normal may be oriented in a different way compared to the first normal and the second normal. The first normal and the third normal may form an angle therebetween. The second normal and the third normal may form an angle therebetween. Thus, the first normal, the second normal and the third normal should be oriented in different ways such that the package may be a three-dimensional package such that a volume of the package may be present.

The third circuit may be placed on a third part of the adhesive strip and may be embedded in the adhesive strip.

Effects and features of the third circuit that may be embedded in the adhesive strip are largely analogous to those described above in connection with the first circuit, the second circuit and the controller that may be embedded in the adhesive strip.

The tag may further comprise a second folding line and a third folding line.

It should be noted that the second folding line and the third folding line may be arranged anywhere on the tag. Thus, the second and third folding lines should be arranged where the tag may be bent or folded. The second folding line and the third folding line may be advantageous when the tag may be bent or folded at more than one place, wherein the first folding line may be present. Further, effects and features of the second folding line and the third folding line are largely analogous to those described above in connection with the first folding line.

The first circuit may be attached to the first surface and the second surface, the second circuit may be attached to the second surface and the third surface and the third circuit may be attached to the first surface and the third surface.

An advantage with positioning the tag on a corner is that the readability and traceability is increased, especially when stacking packages on top of each other.

The adhesive strip may be carton-based.

The controller may be powered via the first circuit when the connection between the second circuit and the controller may be broken.

An advantage with having a tag that comprises two circuits and one controller may be that if one circuits may be broken, the tag may still be traceable. Thus, the other circuit may still be able to transmit the electrical magnetically field into the current for generating the electrical energy. Hence, this may provide for a more secure and stable identification technology.

According to a second aspect, it is provided a method for identifying a package stacked together with a plurality of packages, wherein the package is provided with a tag. The method comprising:
providing an electrical magnetic field;
generating electrical energy via a first circuit or a second circuit comprised in the tag, wherein the first circuit and the second circuit are facing a first surface and a second surface, respectively, of the package, the first surface has a first normal and the second surface has a second normal, wherein the first normal and the second normal forms an angle α therebetween;
powering a controller comprised in the tag via the electrical energy, wherein the controller is connected to the first circuit and the second circuit; and
transmitting an identification code held in a memory comprised in the controller.

The tag may further comprise a first folding line, wherein the first folding line is arranged such that the first circuit and the second circuit are arranged on opposite sides of the first folding line.

The method may further comprise:
generating the electrical energy via a third circuit, wherein the controller is connected to the third circuit.

The tag may be embedded in the package.

The tag may further comprise an adhesive strip in which the first circuit, the second circuit and the controller are embedded. The third circuit may be embedded in the adhesive strip.

Still other objectives, features, aspects and advantages of the invention will appear from the following detailed description as well as from the drawings.

Effects and features of the second and third aspects are largely analogous to those described above in connection with the first aspect. Embodiments mentioned in relation to the first aspect are largely compatible with the second and third aspect. It is further noted that the inventive concepts relate to all possible combinations of features unless explicitly stated otherwise. A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief Description of the Drawings

Embodiments of the invention will now be described, by way of example, with reference to the accompanying schematic drawings, in which
Fig. 1A-C illustrates a package and a tag facing the package.
Fig. 2 illustrates the orientation of a first normal to a first surface of the package and a second normal to a second surface of the package.
Fig. 3 illustrates a tag comprising two circuits and one controller.
Fig. 4 illustrates a tag comprising three circuits and one controller, wherein two of the circuits are jointly connected before being connected to the controller.
Fig. 5 illustrates a tag comprising three circuits and one controller, wherein the controller is connected to each circuit.
Fig. 6 is a flow chart illustrating a method for identifying a package stacked together with a plurality of packages.

### Detailed description

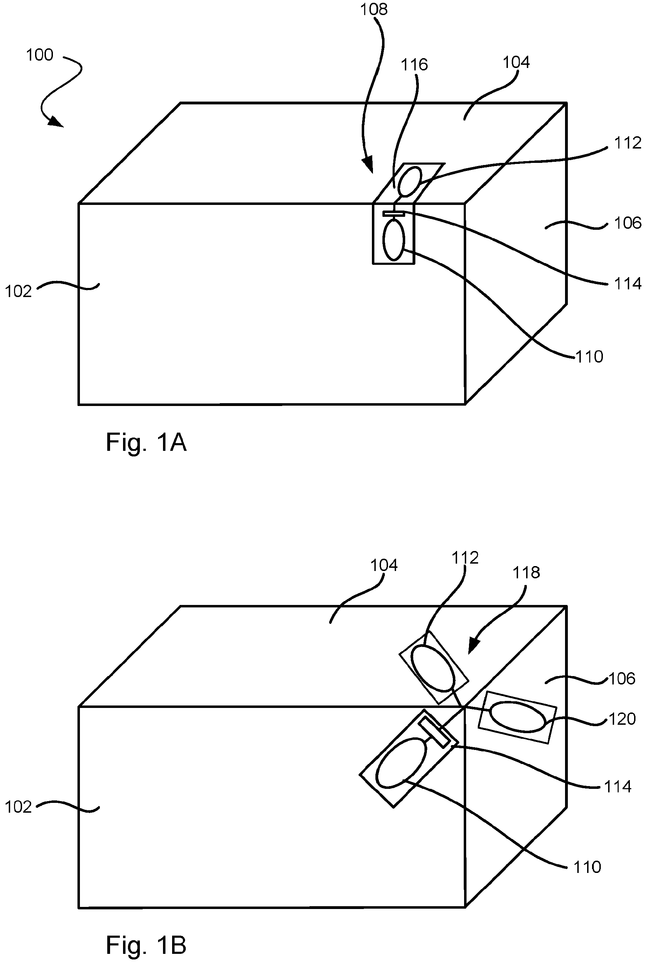

Figure 1A-C illustrates a package 100 by way of example. The package 100 may comprise a first surface 102, a second surface 104 and a third surface 106. However, it should be noted that the package 100 may comprise more surfaces than the surfaces 102, 104, 106 illustrated in Fig. 1A-C. In the illustrated example, the package 100 is of a rectangular prism shape. However, it should be noted that the package 100 may be of any three-dimensional shape. The package 100 further comprises a tag 108, 118. Preferably, the tag 108, 118 is for identifying the package 100. The purpose of the tag 108, 118 is to facilitate traceability of the package 100 such that the package 100 may be identified at a plant, where the package 100 may be produced or filled, but also at a distribution center or at a retailer site. According to one non-limiting example, the tag 108, 118 may be a RFID tag, such as an UHF tag or an HF tag, or any combination thereof.

With reference to Fig. 1A, the tag 108 may comprise a first circuit 110 and a second circuit 112. The tag 108 may further comprise a controller 114. The controller 114 may be connected to the first circuit 110. The controller 114 may be connected to the second circuit 112. The first circuit 110 and the second circuit 112 may be configured to transform an electrical magnetic field into a current for generating electrical energy. The electrical magnetic field may be received from a reader, wherein the reader may be configured to read or trace the tag 108, 118. The controller 114 may be powered by the electrical energy via the first circuit 110 and/or the second circuit 112.

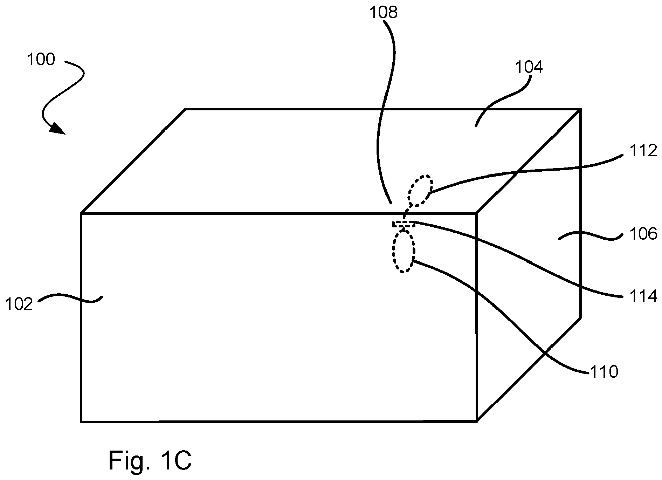

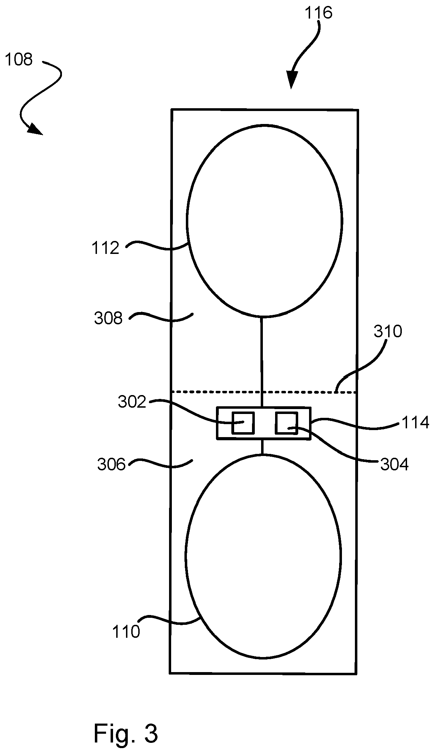

The tag 108 may be facing the first surface 102 and the second surface 104. The first circuit 110 may be facing the first surface 102. The second circuit 112 may be facing the second surface 104. It should be noted that the first circuit 110 may be facing the second surface 106 and vice versa, as long as the two circuits 110, 112 may be facing different surfaces of the package 100. Although not illustrated, the tag 108 may be facing the package 100 in any different way, as long as the tag 108 is facing at least two surfaces of the package 100. The tag 108 may further comprise an adhesive strip 116, in which the first circuit 110, the second circuit 112 and the controller 114 may be embedded. The tag 108 is further discussed in connection with Figs 1C and 3.

With reference to Fig. 1 B, in addition to what have been discussed above, the tag 118 may comprise a third circuit 120. The controller 114 may further be connected to the third circuit 120. The third circuit 120 may be configured to transform the electrical magnetic field into the current for generating electrical energy. The electrical magnetic field may be received from the reader, wherein the reader may be configured to read or trace the tag 108, 118. The controller 114 may further be powered by the electrical energy via the third circuit 120.

The tag 118 may be facing the first surface 102, the second surface 104 and the third surface 106. The first circuit 110 may be facing the first surface 102, the second circuit 112 may be facing the second surface 106 and the third circuit 120 may be facing the third surface 106. Although not illustrated, the tag 118 may be facing the package 100 in any different way, as long as the tag 118 is facing at least three surfaces of the package 100. The third circuit 120 may be embedded in the adhesive strip 116 in a similar way as the first circuit 110, the second circuit 112 and the controller 114. Thus, the tag 108 illustrated in Fig. 1A and the tag 118 illustrated in Fig. 1B differs in that the tag 108 comprises two circuits 110, 112 and one controller 114 and the tag 118 comprises three circuits 110, 112, 120 and one controller 114.

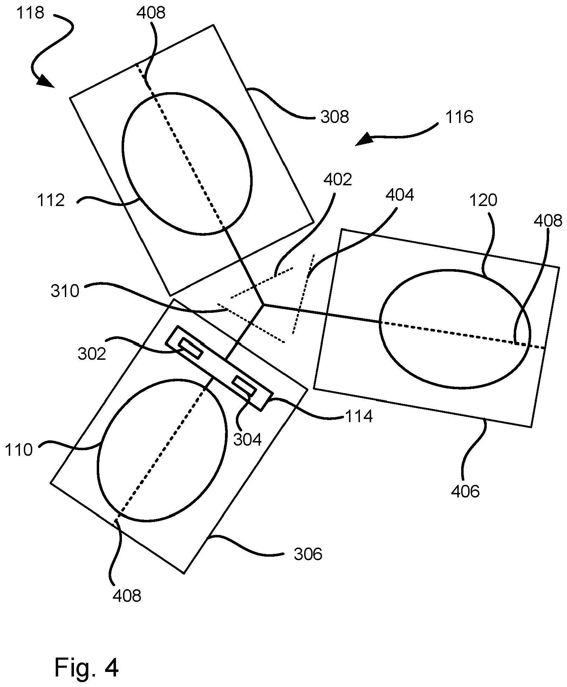

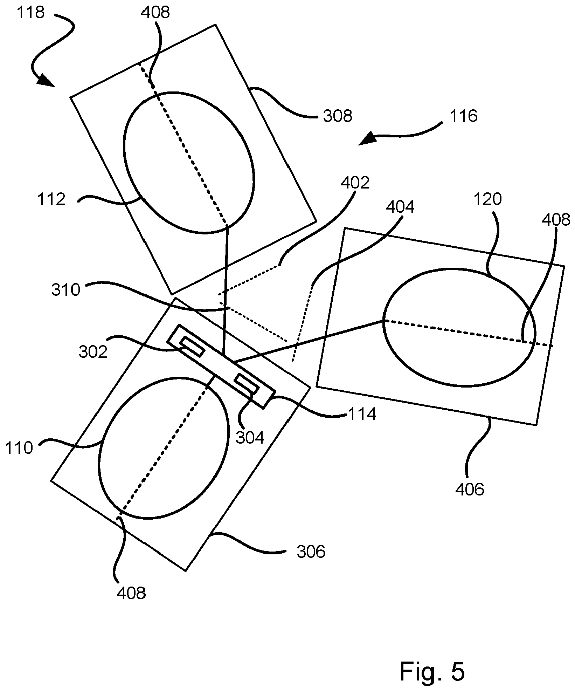

According to one non-limiting example, the tag 118 may be arranged on a corner of the package 100 such that one of the circuits 110, 112, 120 may face two surfaces 102, 104, 106 of the package 100. Thus, the tag 118 may be arranged such that the first circuit 110 may face the first and the second surface 104, 106, the second circuit 122 may face the second and the third circuit 104, 106 and the third circuit 120 may face the first and the third surface 102, 106. The tag 118 will be further discussed in connection with Figs 4 and 5.

With reference to Fig. 1C, another embodiment of the tag 108 illustrated in Fig. 1A is provided by way of example. Herein, the tag 108 is embedded in the package 100. Thus, the tag 108 in Fig. 1C may not comprise the adhesive strip 116 but may be a part of the package 100. It should be noted that the first circuit 110, the second circuit 112 and the controller 114 may also be embedded in the package 100 since the tag 108 may be embedded in the package 100. It should further be noted, although not illustrated, that the tag 118 discussed in connection with Fig. 1B may be arranged in the similar way as the tag 108 discussed in connection with Fig. 1C. Thus, the tag 118 may be embedded in the package 100.

Hence, the tag 108, 118 may be arranged on the package 100 in any different way as long as the tag 108, 118 is facing as many surfaces of the package 100 as there may be circuits present. The tag 108, 118 may comprise more than three circuits and upon that may be the case, the tag 108, 118 may be facing more than three surfaces. The controller 114 may be arranged on the package 100 in any different way as long as the controller 114 is connected to the circuit(s) comprised in the tag 108, 118.

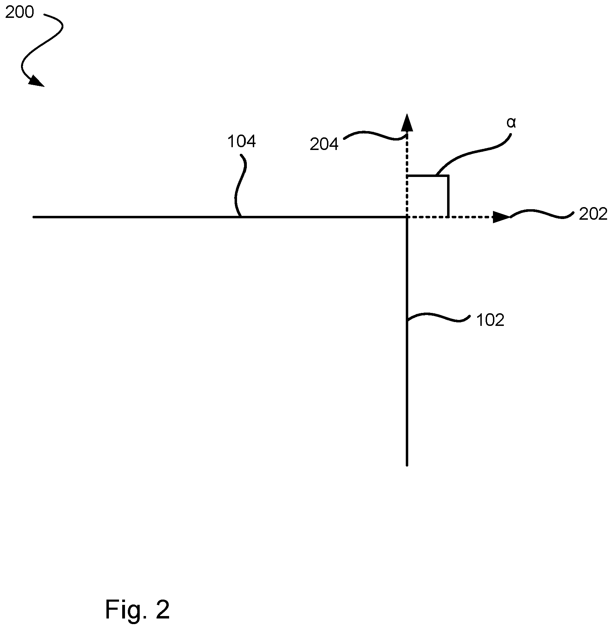

With reference to Fig. 2, a cross-sectional side view 200 of the package 100 is illustrated by way of example. The cross-sectional side view 200 comprises the first surface 102 and the second surface 104. The first surface 102 may have a first normal 202 which is perpendicular to the first surface 102. The second surface 104 may have a second normal 204 which is perpendicular to the second surface 104. The first normal 202 and the second normal 204 may be arranged such that an angle α may be formed therebetween. Put differently, the first surface 102 and the second surface 104 may be arranged such that the angle α may be formed between the first normal 202 and the second normal 204.

Although not illustrated, the third surface 106 may have a third normal being perpendicular to the third surface 106.

According to one non-limiting example, and as illustrated in Fig. 2, if the package 100 may be of the rectangular prism shape, each normal is perpendicular to the other normal. In the event where each normal is perpendicular to the other normal, each surface is perpendicular to the other surfaces as well.

With reference to Fig. 3, the tag 108 discussed in connection with Figs 1A and 1C is illustrated in further detail. In addition to what have been discussed above, the controller 114 may comprise a processor 302 and a memory 304. The memory 304 may be configured to hold an identification code. In the event when the reader may transmit the electrical magnetic field to the tag 108 and wherein the controller 114 may be powered via the first circuit 110 or the second circuit 112, the controller 114 may transmit the identification code from the memory 304 to the reader. The identification code may be a unique code such that the traceability and identification of the package 100 may be unique.

The tag 108 may further comprise a first folding line 310. The first folding line 310 may be configured to divide the tag 108 in a first part 306 and in a second part 308. The first part 306 may be facing the first surface 102 of the package 100. The second part 308 may be facing the second surface 104 of the package 100. Further, the tag 108 may comprise the adhesive strip 116, as in Fig. 1A, and the first folding line 310 may be arranged where the adhesive strip 116 is intended to be folded. Alternatively, the tag 108 may be embedded in the package 100, as in Fig. 1C. The first folding line 310 may be arranged where the package 100 is arranged to be folded, e.g. when erecting a flat-folded blank into a sleeve.

The first part 306 may comprise the first circuit 110 and the second part 308 may comprise the second circuit 112. However, it should be noted that each circuit 110, 112 may be arranged on either the first part 306 or the second part 308 but the respective circuit 110, 112 may not be arranged on the same part 306, 308. Thus, the first circuit 110 and the second circuit 112 may be arranged on opposite sides of the first folding line 310. The first part 306 may further comprise the controller 114. However, the controller 114 may be arranged on the second part 308 as well. Thus, the circuits 110, 112 and the controller 114 may be arranged in any different way as long as the controller 114 may not be arranged where the first folding line 310 is present and as long as the circuits 110, 112 may be arranged on opposite sides. Although not illustrated, the first part 306 and the second part 308 may be asymmetric.

With reference to Figs 4 and 5, the tag 118 discussed in connection with Fig. 1B is illustrated in further detail by way of example. Further to what have been discussed above, the tag 118 may comprise a second folding line 402 and a third folding line 404. The first folding line 310, the second folding line 402 and the third folding line 404 may be configured to divide the tag 118 in the first part 306, the second part 308 and a third part 406. The tag 118 may further comprise a fourth part (not illustrated), wherein the fourth part may be arranged between the first folding line 310, the second folding line 402 and the third folding line 404. According to one non-limiting example, and as illustrated in Figs 4 and 5, the first part 306, the second part 308 and the third part 406 of the adhesive strip 116 may be separately arranged such that the adhesive strip 116 may comprise three pieces of adhesive strips. In such case, the different parts 306, 308, 406 may be connected by the first circuit 110 and/or the second circuit 112 and/or the third circuit 120. According to another non-limiting example, and as illustrated in Fig. 3, the adhesive strip 116 may comprise one piece of adhesive strip, wherein the piece may be divided into the first part 306 and the second part 308 by the first folding line 310. Thus, it should be noted that the adhesive strip 116 may be designed in different ways, formed by one or more pieces of adhesive strips. As illustrated in Figs 4 and 5, the folding lines 310, 402, 404 may be arranged such that each part 306, 308, 406 of the tag 118 may be facing different surfaces 102, 104, 106 of the package 100. However, it should be noted, although not illustrated, that the folding lines 310, 402, 404 may be arranged in any different way as long as the tag 118 may be facing three surfaces of the package 100. According to one non-limiting example, the folding line 310, 402, 404 may be arranged across the circuits 110, 112, 120 such that one circuit may be facing two surfaces of the package 100 (see the dotted folding lines 408 in Figs 4 and 5).

According to one non-limiting example and as illustrated in Fig. 4, the second circuit 122 and the third circuit 126 may be jointly connected before connecting to the controller 124. Thus, the second circuit 122 and the third circuit 126 may be connected to the controller 114 as one circuit.

According to one other non-limiting example and as illustrated in Fig. 5, each of the first circuit 120, the second circuit 122 and the third circuit 126 may respectively be connected to the controller 114.

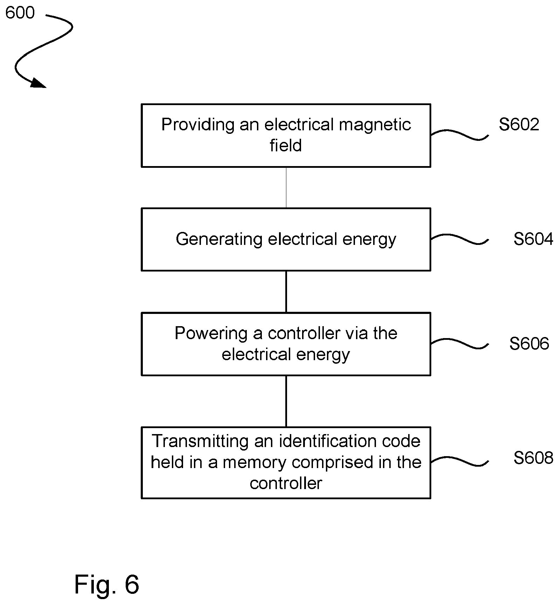

In Fig. 6 it is presented a flow chart illustrating a method 600 for identifying a package 100 stacked together with a plurality of packages, wherein a tag 108, 118 may be facing the package 100.

In a first step S602, an electrical magnetic field may be provided. The electrical magnetic field may be provided by a reader.

In a second step S604, the electrical energy may be generated via a first circuit 110 or a second circuit 112, wherein the first circuit 110 and the second circuit 112 may be comprised in the tag 108, 118. The first circuit 110 and the second circuit 112 may be facing a first surface 102 and a second surface 104, respectively, of the package 100. The first surface 102 may have a first normal 202 and the second surface 104 may have a second normal 204. The first normal 202 and the second normal 204 may form an angle α therebetween.

In a third step S606, a controller 114 may be powered via the electrical energy, wherein the controller 114 may be comprised in the tag 108, 118. The controller 114 may be connected to the first circuit 110 and the second circuit 112.

In a fourth step S608, an identification code, held in a memory 304 comprises in the controller, may be transmitted.

Optionally, the tag 108, 118 disclosed in the method 600 for identifying the package 100 may further comprise a first folding line 310. The first folding line 310 may be arranged such that the first circuit 110 and the second circuit 112 may be arranged on opposite sides of the first folding line 310.

Optionally, the method 600 may further comprise generating the electrical energy via a third circuit 120.

From the description above follows that, although various embodiments of the invention have been described and shown, the invention is not restricted thereto, but may also be embodied in other ways within the scope of the subject-matter defined in the following claims.

As already discussed, one or more embodiments relate to a tag 108, 118 e.g. for attaching on a package 100. The tag 108, 118 comprises a first circuit 110 for transforming an electrical magnetic field into a current for generating electrical energy and a second circuit 112 for transforming an electrical magnetic field into a current for generating electrical energy. The first circuit 110 may be configured to transform an electrical magnetic field into a current independently of the second circuit 112, and vice versa.

The first circuit 110 may be activated independently with respect to the second circuit 112. In other words, the first circuit 110 may transform an electrical magnetic field into a current for generating electrical energy independently of the presence and/or activation of the second circuit, and vice versa.

As discussed, the tag 108, 118 comprises the controller 114 comprising a processor 202 and a memory 304 configured to hold an identification code of the package 100.

In one or more embodiments, the first circuit 110 may be configured to be attached on a first surface 102 of the package 100 and the second circuit 112 may be configured to be attached on a second surface 104 of the package 100, wherein the first surface 102 has a first normal 202 and the second surface 104 has a second normal 204, wherein the first normal 202 and the second normal 204 forms an angle α therebetween.

The tag 108, 118 may be configured to be embedded in the package 100.

The tag 108, 118 may further comprise a third circuit 120 for transforming the electrical magnetic field into the current for generating electrical energy, e.g. independently of the first 110 and/or second 112 circuit. The third circuit 120 may be configured to be activated independently of the first 110 and/or second 112 circuit. That is, the third circuit 120 may be activated and/or work even if the first circuit 110 and/or the second circuit 112 are not activated and/or present.

The third circuit 120 may be configured to be attached on a third surface 106 of the package 100, the third surface 106 having a third normal.

One or more embodiments relate to a package 100, as previously described, comprising a tag 108, 118 having one or more features as discussed previously. The package 100 comprises at least a first surface 102 and a second surface 104, wherein the first surface 102 has a first normal 202 and the second surface 104 has a second normal 204 and wherein the first normal 202 and the second normal 204 forms an angle α therebetween. The tag 108, 118 comprises a first circuit 110 and a second circuit 112 that are attached on the first surface 102 and the second surface 104, respectively.

## Claims

1. A tag (108, 118), comprising:
a first circuit (110) and a second circuit (112) for transforming an electrical magnetic field into a current for generating electrical energy; and
a controller (114) powered via the electrical energy, wherein the controller (114) comprises a processor (202) and a memory (304) configured to hold an identification code, wherein the controller (114) is connected to the first circuit (110) and the second circuit (112);
wherein the first circuit (110) is configured to be attached on a first surface (102) of a package (100) and the second circuit (112) is configured to be attached on a second surface (104) of the package (100), wherein the first surface (102) has a first normal (202) and the second surface (104) has a second normal (204), wherein the first normal (202) and the second normal (204) form an angle α therebetween.

2. The tag (108, 118) according to claim 1, wherein α = 90 degrees.

3. The tag (108, 118) according to claim 1 or 2, wherein the tag (108, 118) is configured to be embedded in the package (100).

4. The tag (108, 118) according to claim 1 or 2, wherein the tag (108, 118) further comprises an adhesive strip (116) in which the first circuit (110) and the controller (114), placed in a first part (306) of the adhesive strip (116), and the second circuit (112), placed in a second part (308) of the adhesive strip (116), are embedded.

5. The tag (108, 118) according to any one of the preceding claims, wherein the tag (108, 118) further comprises a first folding line (310), wherein the first folding line (310) is arranged such that the first circuit (110) and the second circuit (112) are arranged on opposite sides of the first folding line (310).

6. The tag (108, 118) according to any one of the preceding claims, further comprises
a third circuit (120) for transforming the electrical magnetic field into the current for generating electrical energy,
wherein the controller (114) is further connected to the third circuit (120); and
wherein the third circuit (120) is configured to be attached to a third surface (106) of the package (100), wherein the third surface (106) has a third normal.

7. The tag (108, 118) according to claim 6, wherein the third circuit (120), placed in a third part (408) of the adhesive strip (116), is embedded in the adhesive strip (116).

8. The tag (108, 118) according to any one of the claims 6 to 7, wherein the tag (108, 118) further comprises a second folding line (404) and a third folding line (406).

9. The tag (108, 118) according to any of claims 6-8, wherein the first circuit (110) is attached to the first surface (102) and the second surface (104), the second circuit (112) is attached to the second surface (104) and the third surface (106) and the third circuit (120) is attached to the first surface (102) and the third surface (106).

10. The tag (108, 118) according to any one of the preceding claims, wherein the adhesive strip (116) is carton-based.

11. The tag (108, 118) according to any one of the preceding claims, wherein the controller (114) is powered via the first circuit (110) when the connection between the second circuit (112) and the controller (114) is broken.

12. A method (600) for identifying a package (100) stacked together with a plurality of packages, wherein the package (100) is provided with a tag (108, 118), the method (600) comprising:
providing (S602) an electrical magnetic field;
generating (S604) electrical energy via a first circuit (110) or a second circuit (112) comprised in the tag (108, 118), wherein the first circuit (110) and the second circuit (112) are facing a first surface (102) and a second surface (104), respectively, of the package (100), the first surface (102) has a first normal (202) and the second surface (104) has a second normal (204), wherein the first normal (202) and the second normal (204) forms an angle α therebetween;
powering (S606) a controller (114) comprised in the tag (108, 118) via the electrical energy, wherein the controller (114) is connected to the first circuit (110) and the second circuit (112); and
transmitting (S608) an identification code held in a memory (304) comprised in the controller (114).

13. The method (600) according to claim 12, wherein the tag (108, 118) further comprises a first folding line (310), wherein the first folding line (310) is arranged such that the first circuit (110) and the second circuit (112) are arranged on opposite sides of the first folding line (310).

14. The method (600) according to claims 12 or 13, further comprises generating the electrical energy via a third circuit (120) comprised in the tag (108, 118), wherein the controller (114) is connected to the third circuit (120).

15. A package (100) comprising:
- a first surface (102) having a first normal (202),
- a second surface (104) having a second normal (204), wherein the first normal (202) and the second normal (204) form an angle α therebetween, and
- a tag (108, 118) according to any of claims 1-11, the tag (108, 118) comprising:
a first circuit (110) for transforming an electrical magnetic field into a current for generating electrical energy and attached on the first surface (102),
a second circuit (112) for transforming an electrical magnetic field into a current for generating electrical energy and attached on the second surface (104); and
a controller (114) powered via the electrical energy, wherein the controller (114) comprises a processor (202) and a memory (304) configured to hold an identification code, wherein the controller (114) is connected to the first circuit (110) and the second circuit (112).
